# EUROPEAN PATENT APPLICATION

(11) **EP 3 546 830 A1**
(43) Date of publication of application: **02.10.2019**
(21) Application number: 18382209.7
(22) Date of filing: 26.03.2018
(51) Int. Cl.: F23K 5/14, F23N 1/00, F16K 3/08, F16K 11/074, F16K 31/04

(54) **GAS COCK WITH A SAFETY VALVE FOR A GAS COOKING APPLIANCE, AND GAS COOKING APPLIANCE INCORPORATING SAID GAS COCK**

(71) Applicant: Copreci, S.Coop., 20550 Aretxabaleta (ES)
(72) Inventor: AYASTUY ARETXAGA, Iñaki, 20570 BERGARA (ES); ARRIOLA-BENGOA UNZUETA, Imanol, 01193 ERENTXUN (ES)
(74) Representative: Igartua, Ismael

(57) **Abstract**

Gas cock with a safety valve for a gas cooking appliance, comprising a body (10) comprising a gas inlet conduit (11) fluidically communicated with the safety valve (30), and at least one gas outlet conduit (12); a rotating disk (20) suitable for regulating the incoming gas flow from the safety valve (30) to the outlet conduit (12) depending on the angular position thereof; and a drive shaft (40) coupled to the rotating disk (20) and axially movable. The gas cock (100) comprises blocking means comprising at least one closure plug (84) blocking a certain area of the rotating disk (20) when the drive shaft (40) is arranged in an axial blocking position, said closure plug (84) being attached to the drive shaft (40) through an arm (83).

## Description

### TECHNICAL FIELD

The present invention relates to gas cocks with a safety valve for a gas cooking appliance, and to gas cooking appliances incorporating said gas cocks.

### PRIOR ART

Gas cocks with a safety valve for a gas cooking appliance are known.

Document EP2682678A2 describes a gas cock with a safety valve for a gas cooking appliance, comprising a body comprising a gas inlet conduit fluidically communicated with the safety valve, and two gas outlet conduits; a regulating element suitable for regulating the incoming gas flow from the safety valve to the outlet conduits depending on the angular position thereof, the regulating element being arranged in a housing of the body fluidically communicated with the safety valve and with the outlet conduits; and a drive shaft coupled to the regulating element, said drive shaft being rotatable between an initial rotation position and a final rotation position, and axially movable between an axial standby position and an axial pressing position, in order to act on the transmission element to open the safety valve, when it is arranged in the axial pressing position. The gas cock also comprises blocking means for closing the gas passage of a gas outlet conduit when the drive shaft is arranged in an axial blocking position, and guiding means for moving the drive shaft to the axial blocking position when said drive shaft is arranged in at least a given angular interval.

### DISCLOSURE OF THE INVENTION

The object of the invention is to provide a gas cock with a safety valve for a gas cooking appliance, and a gas cooking appliance incorporating said gas cock, as defined in the claims.

The gas cock of the invention comprises a body comprising a gas inlet conduit fluidically communicated with the safety valve, and at least one gas outlet conduit; a regulating element suitable for regulating the incoming gas flow from the safety valve to the outlet conduit depending on the angular position thereof, the regulating element being arranged in a housing of the body fluidically communicated with the safety valve and with the outlet conduit; a drive shaft coupled to the regulating element, said drive shaft being rotatable between an initial rotation position and a final rotation position, and axially movable between an axial standby position and an axial pressing position, in order to act on the transmission element to open the safety valve, when it is arranged in the axial pressing position; blocking means for closing the gas passage of at least one gas outlet conduit when the drive shaft is arranged in an axial blocking position; and guiding means for moving the drive shaft to the axial blocking position when said drive shaft is arranged in at least a given angular interval.

The regulating element is a rotating disk comprising at least one connection opening for regulating gas flow to the outlet conduit depending on the angular position thereof, the rotating disk comprising a coupling hole with the drive shaft going through same, and said rotating disk being axially retained supported on a contact area of the housing of the body, the contact area comprising at least one outlet hole fluidically communicated with the gas outlet conduit, and the blocking means comprising at least one closure plug blocking a certain area of the rotating disk, when the drive shaft is arranged in the axial blocking position, said at least one closure plug being attached to the drive shaft through at least one arm.

In gas cocks with a safety valve of the prior art, the regulating element for regulating gas flow rate is a frustoconical part which is form-fitted in a chamber of the body of the gas cock and may sometimes seize up when too much force is applied on it by means of the manual drive shaft, such that the gas passage may remain open, causing unburned gas to leak out. This problem is solved by replacing the regulating element of the prior art with a disk-shaped regulating element for regulating the gas flow rate since the contact surface in the pushing direction of the drive shaft is reduced. Furthermore, the rotating disk rotates integrally with the drive shaft, and the blocking means comprise at least one closure plug coupled such that it rotates integrally with the drive shaft, blocking at least one connection opening of the rotating disk, and therefore blocking the gas passage to the outlet conduit, when the drive shaft is arranged in the axial blocking position in a given angular interval. By closing the gas passage in given angular positions of the drive shaft, such as when one of the outlet conduits feeds gas to a crown of a gas burner during transition from a minimum position to a closed position, for example, there is no risk of unburned gas flowing out. An optimized and safe gas cock is thereby obtained.

These and other advantages and features of the invention will become evident in view of the drawings and detailed description of the invention.

### DESCRIPTION OF THE DRAWINGS

Figure 1 shows a perspective view of an embodiment of the gas cock with a safety valve of the invention.
Figure 2 shows another perspective view of the gas cock of Figure 1.
Figure 3 shows a sectional perspective view of the gas cock of Figure 1, the closure plug of the blocking means closing a connection opening of the rotating disk.
Figure 4 shows a sectional perspective view of the gas cock of Figure 1, the closure plug of the blocking means being separated from the rotating disk.
Figure 5 shows a perspective view of an embodiment of the rotating disk of the gas cock of Figure 1, with three connection openings.
Figure 6 shows a partial sectional front view of the gas cock of Figure 1, the closure plug being attached to the rotating disk.
Figure 7 shows a partial sectional front view of the gas cock of Figure 1, the closure plug being separated from the rotating disk.
Figure 8 shows a bottom perspective view of the cap of the gas cock of Figure 1.
Figure 9 shows a perspective view of the arm of the closure plug of the gas cock of Figure 1.
Figure 10 shows a perspective view of the closure plug of the gas cock of Figure 1.
Figure 11 shows a sectional bottom perspective view of the drive shaft, the cap, and the body of the gas cock of Figure 1, with the radial stud of the drive shaft arranged in a closed (OFF) gas flow regulation position.
Figure 12 shows a sectional bottom perspective view of the drive shaft, the cap, and the body of the gas cock of Figure 1, with the radial stud of the drive shaft arranged in an intermediate gas flow regulation position.
Figure 13a shows a sectional front view of the gas cock of Figure 1, the gas cock being arranged in a closed (OFF) gas flow regulation position.
Figure 13b shows a sectional front view of the gas cock of Figure 1, the gas cock being arranged in a maximum (MAX) gas flow regulation position for the two gas outlet conduits.
Figure 13c shows a sectional front view of the gas cock of Figure 1, the gas cock being arranged in a maximum (MAX) gas flow regulation position for the first gas outlet conduit, and a minimum (MIN) gas flow regulation position for the second gas outlet conduit.
Figure 13d shows a sectional front view of the gas cock of Figure 1, the gas cock being arranged in a maximum (MAX) gas flow regulation position for the first gas outlet conduit, and a closed (OFF) gas flow regulation position for the second gas outlet conduit.
Figure 13e shows a sectional front view of the gas cock of Figure 1, the gas cock being arranged in a minimum (MIN) gas flow regulation position for the first gas outlet conduit, and a closed (OFF) gas flow regulation position for the second gas outlet conduit.

### DETAILED DISCLOSURE OF THE INVENTION

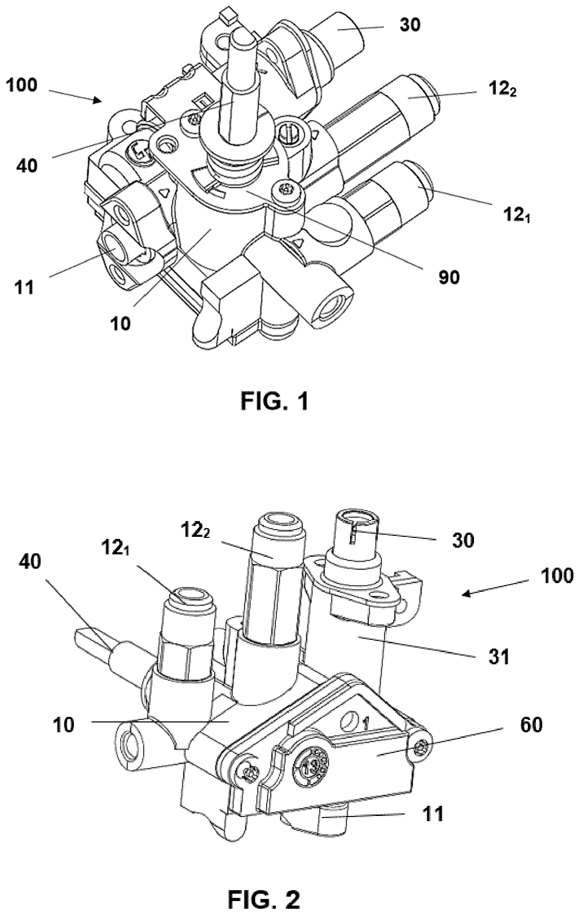

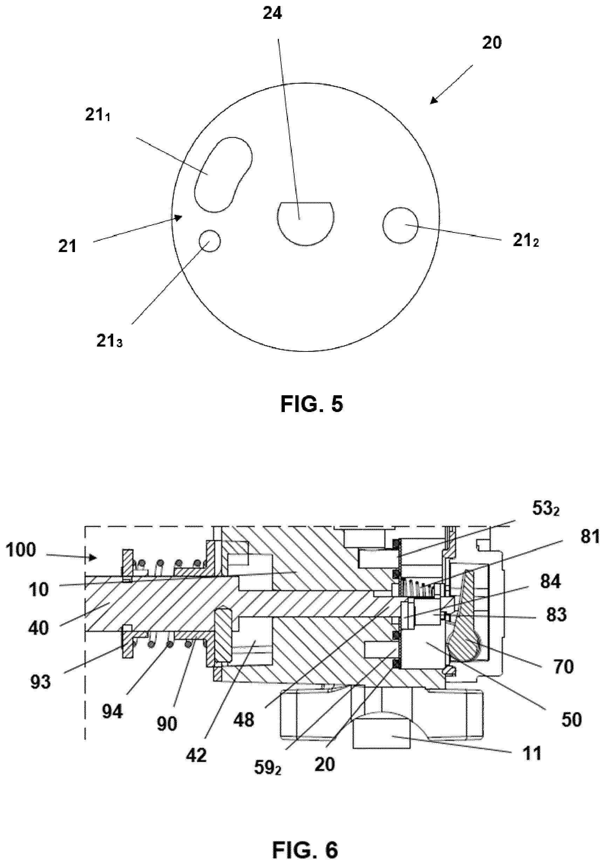

Figures 1 to 13a-e show an embodiment of the gas cock 100 with a safety valve 30 according to the invention, comprising two gas outlet conduits 12₁ and 12₂.

The gas cock 100 comprises a body 10 comprising a gas inlet conduit 11 which is fluidically communicated with the safety valve 30, and the gas outlet conduits 12₁ and 12₂ are suitable for conducting the incoming gas to a double burner (not shown in the drawings) comprising a main crown and a secondary crown. In this embodiment of the gas cock 100, the first gas outlet conduit 12₁ is suitable for conducting the incoming gas to the main crown, and the second outlet conduit 12₂ is suitable for conducting the incoming gas to the secondary crown.

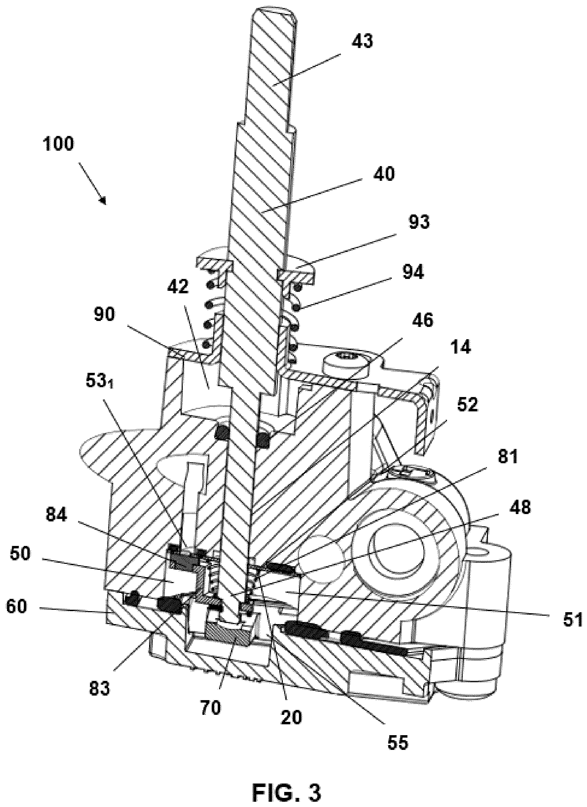

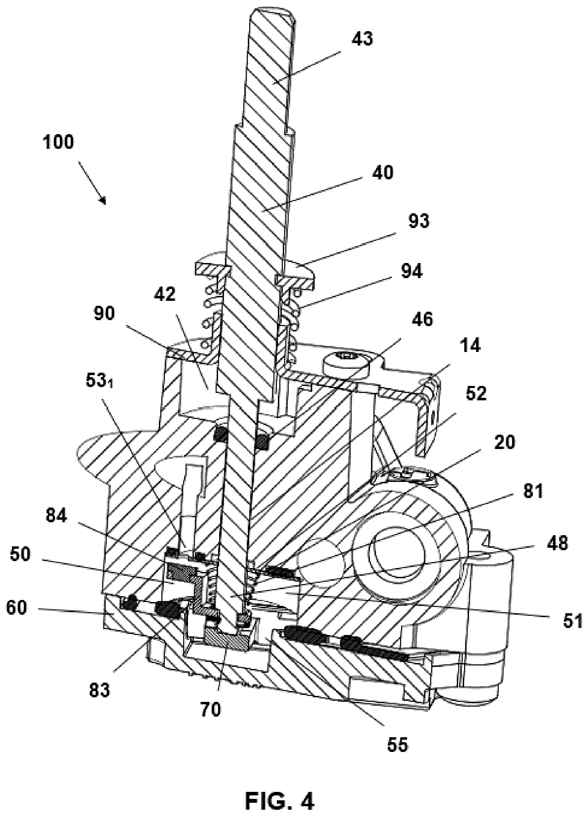

The gas cock 100 further comprises a regulating element suitable for regulating the incoming gas flow from the safety valve 30 to the outlet conduits 12₁ and 12₂ depending on the angular position thereof, the regulating element being arranged in a housing 51 of the body 10 which is fluidically communicated with the safety valve 30 and with the outlet conduits 12₁ and 12₂. The gas cock 100 also comprises a drive shaft 40 coupled to the regulating element, said drive shaft 40 being rotatable between an initial rotation position and a final rotation position, and axially movable between an initial standby position and an axial pressing position. The axial standby position corresponds with the axial position of the drive shaft 40 in normal operation, shown in Figure 3, and the axial pressing position corresponds with the position of the drive shaft 40 when it is pressed, shown in Figure 4. In the shown embodiment of the gas cock 100, the movement of the drive shaft 40 between both axial positions is at least 1.0 mm, said movement being about 3.0 mm at most. In the axial pressing position, the drive shaft 40 acts on a transmission element 70 to open the safety valve 30.

The gas cock 100 also comprises blocking means for closing the gas passage of the second gas outlet conduit 12₂ when the drive shaft 40 is arranged in an axial blocking position. In this embodiment of the gas cock 100, the axial blocking position coincides with the axial standby position. The gas cock 100 also comprises guiding means which allow moving the drive shaft 40 to the axial blocking position when said drive shaft 40 is arranged in a given angular interval.

In this embodiment, the regulating element is a rotating disk 20 comprising three connection openings 21₁, 21₂, and 21₃ for regulating gas flow to the outlet conduits 12₁ and 12₂ depending on the angular position thereof. The rotating disk 20 comprises a coupling hole 24 having a D shape in this embodiment, with the drive shaft 40 going through same. Said rotating disk 20 is axially retained supported on a contact area 52 of the housing 51 of the body 10, the contact area 52 comprising two outlet holes 53₁ and 53₂ accordingly in fluid communication with the two gas outlet conduits 12₁ and 12₂. This embodiment of the gas cock 100 also comprises in the contact area 52 two minimum holes 59₁ and 59₂ accordingly in fluid communication with the two gas outlet conduits 12₁ and 12₂ through two minimum conduits for obtaining a minimum gas flow in each of the two outlet conduits 12₁ and 12₂. Gas flow to the outlet conduits 12₁ and 12₂ is regulated by overlapping the outlet holes 53₁ and 53₂ and/or the minimum holes 59₁ and 59₂ with the connection openings 21₁, 21₂, and 21₃ of the rotating disk 20.

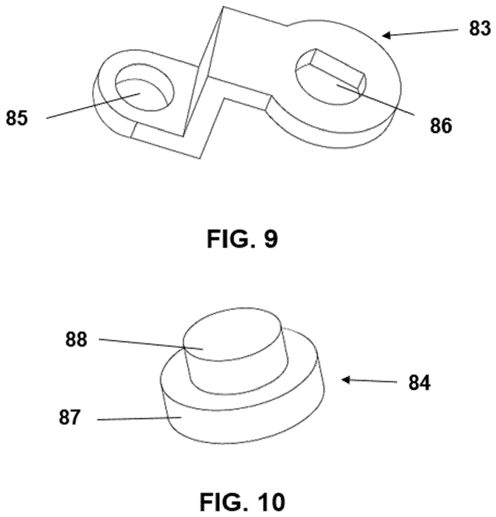

In this embodiment of the gas cock 100, the blocking means comprise a closure plug 84 blocking the connection opening 21₃ of the rotating disk 20 when the drive shaft 40 is arranged in the axial blocking position. This closure plug 84 is attached to the drive shaft 40 through an arm 83. As shown in Figure 10, in this embodiment the closure plug 84 is a cylindrical part with two cylindrical bodies 87 and 88 having a different diameter attached to one another, the body 87 being the portion of the closure plug 84 which closes the connection opening 21₃ of the rotating disk 20, and the body 88 being the portion which is coupled to the arm 83. In this embodiment, the closure plug 84 is made of an elastomer material, which allows it to fully adapt to the rotating disk 20. As shown in Figure 9, in this embodiment the arm 83 is a Z-shaped part with two parallel arms and a vertical arm. One of the parallel arms comprises a hole 85 in which the cylindrical body 88 of the closure plug 84 is coupled, the closure plug 84 and the arm 83 being integrated as a single part. The second parallel arm comprises a D-shaped coupling hole 86 which allows being coupled with the drive shaft 40.

The body 10 of the gas cock 100 comprises a through hole 14 communicated through one of its ends with the housing 51, the drive shaft 40 going through the through hole 14 and the drive shaft 40 being tightly fitted with possibility of rotation and axial movement in said through hole 14. The drive shaft 40 comprises a lower end 48 acting on the transmission element 70, and another upper end 43 to which a knob (not depicted) that can be operated by the user is coupled. The end 48 is arranged in the housing 51 when the drive shaft 40 is not axially pressed, and said end 48 is coupled to the rotating disk 20 in the coupling hole 24, said coupling hole 24 allowing axial movement of the drive shaft 40 without axially moving the rotating disk 20. The rotating disk 20 is arranged facing the transmission element 70.

In this embodiment, the gas cock 100 comprises a cover 60 attached to the body 10 closing in a leak-tight manner a chamber 50 formed by the housing 51 of the rotating disk 20 and a second housing 55 arranged in the cover 60. The second housing 55 is fluidically communicated with the safety valve 30 through a hole of the body 10, the transmission element 70 which acts on the safety valve 30 being housed in the second housing 55. In this embodiment, the transmission element 70 is a rocker arm, and the safety valve 30 comprises a shutter closing it, such that when the drive shaft 40 is axially pressed, the end 48 presses the transmission element 70, and this transmission element acts on the shutter, opening the safety valve 30, where the incoming gas can go from the inlet conduit 11, through the safety valve 30, and to the second housing 55. The other end of the through hole 14 of the body 10 is communicated with a seat comprising an O-ring 46, the O-ring 46 being arranged surrounding the drive shaft 40 and tightly fitted against the seat assuring leak-tightness, a completely leak-tight chamber 50 being obtained.

In this embodiment, the gas cock 100 comprises a spring 94 comprising an end arranged supported on a washer 93, said washer 93 being arranged coupled to the drive shaft 40 on the outside of the gas cock 100, and a second end supported on the outer portion of a cap 90 of the gas cock 100, said cap 90 covering a housing 42 in which the seat comprising the O-ring 46 is arranged. When the drive shaft 40 is no longer pushed to open the safety valve 30, the spring 94 returns the drive shaft 40 to the axial standby position. The drive shaft 40 goes through the cap 90, and the housing 42, inside which the O-ring 46 is arranged, is arranged opposite the chamber 50 with reference to the body 10 of the gas cock 100 and in the direction of the drive shaft 40, both chamber and housing 50 and 42 being separated by the through hole 14 of the body 10.

When the drive shaft 40 is rotated, the rotating disk 20 and the arm 83 with the closure plug 84 rotate integrally, the closure plug 84 being arranged together with the arm 83 in the housing 51 of the body 10 between the transmission element 70 and the rotating disk 20. In this embodiment of the gas cock 100, the second parallel arm of the arm 83 is coupled at the lower end 48 of the drive shaft 40 through the coupling hole 86. The body 87 of the closure plug 84 is facing the connection opening 21₃ of the rotating disk 20, such that they coincide with one another in the axial direction of the axial movement of the drive shaft 40. So when the drive shaft 40 is moved to the axial blocking position, the body 87 of the closure plug 84 blocks the connection opening 21₃ regardless of the angular position of the drive shaft 40.

One face of the rotating disk 20 is supported on the contact area 52 of the housing 51 of the body 10. The contact area 52 on which the rotating disk 20 is supported comprises a flat support surface comprising a channel surrounding each of the outlet holes 53₁ and 53₂, a corresponding sealing gasket being housed in said channel pressed by the face of the rotating disk 20. Similarly, the flat support surface of the contact area 52 comprises a channel surrounding each of the minimum holes 59₁ and 59₂, a corresponding sealing gasket being housed in said channel pressed by the face of the rotating disk 20. Gas flow to the gas outlet conduits 12₁ and 12₂ is thereby regulated by rotating the rotating disk 20 and overlapping the connection openings 21₁, 21₂, and 21₃ of the rotating disk 20 with the outlet hole 53₁ and 53₂ and/or with the minimum holes 59₁ and 59₂.

The rotating disk 20 is axially retained supported on the flat surface of the contact area 52 of the housing 51 of the body 10 by means of a spring 81. This spring 81 pushes the rotating disk 20 at one of the ends thereof, the other end of the spring 81 being supported on the outside of a cap 90 of the gas cock 100. The rotating disk 20 is axially retained supported on the flat surface of the contact area 52 of the housing 51 of the body 10 by means of a spring 81. This spring 81 pushes the rotating disk 20 at one of the ends thereof, the other end of the spring 81 being supported on the second parallel arm of arm 83, which is coupled to the lower end 48 of the drive shaft 40.

In this embodiment of the gas cock 100, the spring 81 is a variable load spring, such that when the drive shaft 40 is not pushed axially, the spring 81 pushes the rotating disk 20 with a greater force than when the drive shaft 40 is pushed axially, since the spring 81 moves axially with the drive shaft 40. However, the load of the spring 81 is calculated such that in the axial pressing position of the drive shaft 40, the spring 81 has a sufficient load to axially retain the rotating disk so that it is supported against the contact area 52, and in its most restricted axial position, it does not have a load blocking the rotating disk 20 in the angular movement thereof, the spring 81 rotating with the rotation of the rotating disk 20.

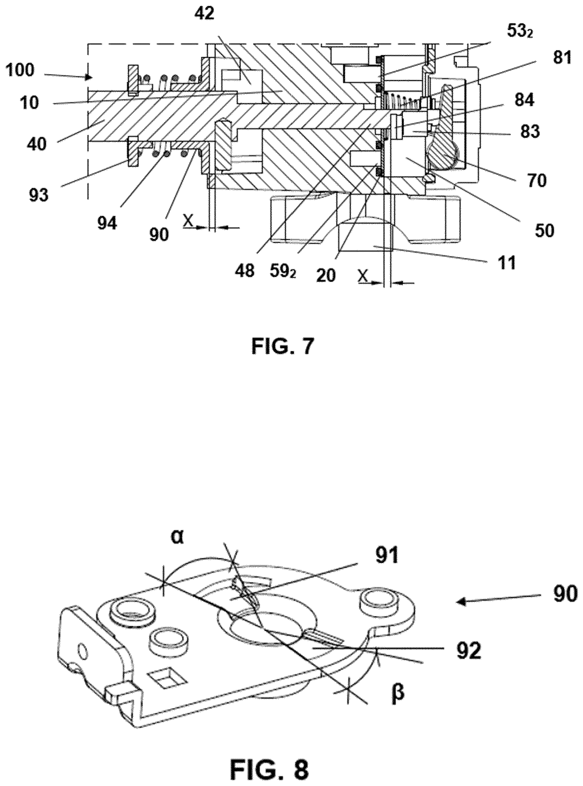

In this embodiment, the gas cock 100 comprises a radial stud 41 arranged in an orthogonal manner in the drive shaft 40, and the guiding means comprise a guiding surface 91, 92, 97 interacting with the transverse stud 41, said guiding surface 91, 92, 97 establishing angular intervals 91, 92 in which the drive shaft 40 is in the axial blocking position. In this embodiment of the gas cock 100, the guiding surface 91, 92, 97 is arranged on an inner face of the cap 90, as shown in Figures 8, 11, and 12. The angular intervals 91 and 92 are housings arranged on the inner face of the cap 90, with a contact surface at an axial height different from the axial height of the surface 97 of the inner face of the cap 90.

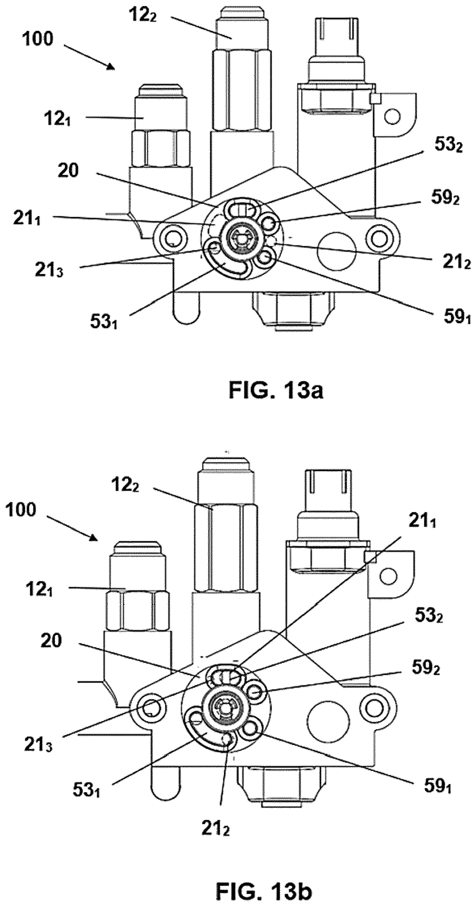

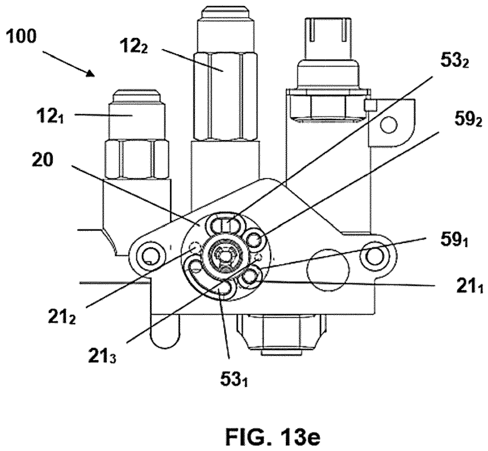

The angular intervals 91 and 92 define an angle α and β, respectively, between their side walls and the drive shaft 40 goes through the center of the through hole of the cap 90. In this embodiment of the gas cock 100, said angles α and β are the same. The angular interval 91 corresponds with an angular position of the drive shaft 40 which is the initial rotation position of the drive shaft 40, which in this embodiment of the gas cock 100 is the closed OFF position with no gas flow, as shown in Figure 13a, and the axial height of the contact surface of the angular interval 91 corresponds with the axial blocking position which, in this embodiment of the gas cock 100, is equivalent to the axial standby position. When the radial stud 41 is in the angular interval 91, the drive shaft 40 will be in the axial blocking position, the closure plug 84 blocks the connection opening 21₃, and the connection openings 21₁ and 21₂ of the rotating disk 20 do not overlap the outlet holes 53₁ and 53₂ or the minimum holes 59₁ and 59₂ of the contact area 52.

The angular interval 92 corresponds with an angular position of the drive shaft 40 for regulating gas flow which, in this embodiment of the gas cock 100, is a position in which the outlet conduit 12₂, after the rotating disk 20 has been in an angular position in which said outlet conduit 12₂ allowed a minimum MIN gas outflow, and after the drive shaft 40 has been rotated again, said outlet conduit 12₂ does not allow gas outflow and is therefore closed. The axial height of the contact surface of the angular interval 92 corresponds with the axial blocking position which is equivalent to the axial standby position in this embodiment of the gas cock 100.

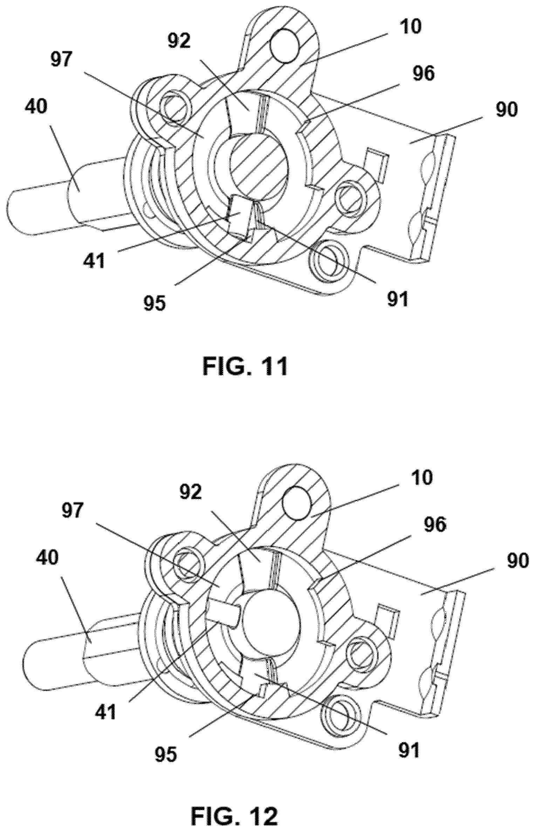

When the drive shaft 40 of the gas cock 100 is in the initial rotation position, as shown in Figure 13a, the radial stud 41 is arranged housed in the angular interval 91, as shown in Figure 11, the body 10 of the gas cock 100 comprising a stop 95 defining the initial rotation position. When the gas cock 100 is to be opened, the drive shaft 40 is pressed, moving it to the axial pressing position to open the safety valve 30 while at the same time being rotated about 90° to the maximum MAX gas flow position. The radial stud 41 comes out of angular interval 91, and after the gas passage has been opened, the drive shaft 40 is no longer pressed, the radial stud being supported on the contact surface 97 of the inner face of the cap. The drive shaft 40 is arranged in an axial regulation position along the contact surface 97, and in this specific angular position the gas cock 100 is in a maximum MAX gas flow regulation position for the two gas outlet conduits 12₁ and 12₂, as shown in Figure 13b, the connection opening 21₁ overlapping the outlet hole 53₂, the connection opening 21₂ overlapping the outlet hole 53₁, and the connection opening 21₃ not overlapping any hole.

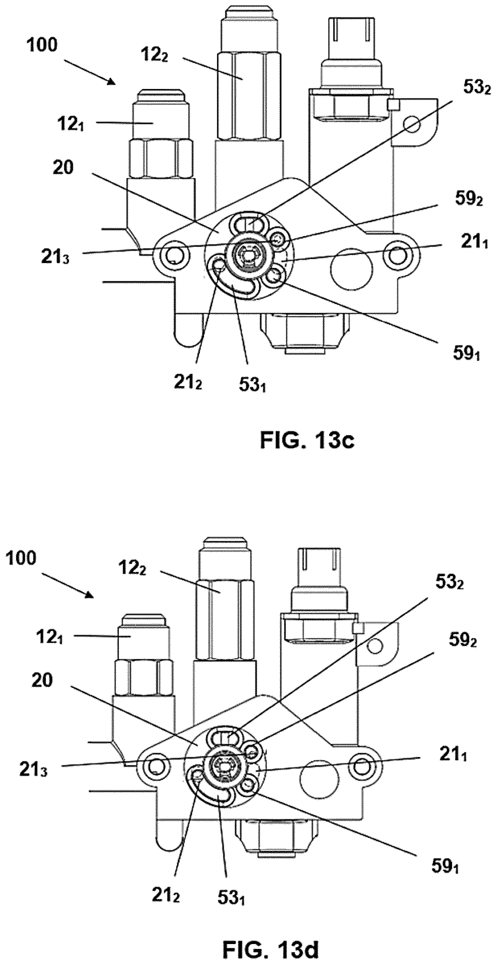

If the drive shaft 40 is rotated in the clockwise direction as seen in Figures 11 and 12, the radial stud 41 slides onto the contact surface 97, and the gas cock 100 can be arranged in a minimum MIN gas flow regulation position for the gas outlet conduit 12₂ and a maximum MAX gas flow regulation position for the gas outlet conduit 12₁, as shown in Figure 13c, the connection opening 21₃ overlapping the minimum hole 59₂, and the connection opening 21₂ overlapping the outlet hole 53₁, and the connection opening 21₁ not overlapping any hole, accordingly.

When the drive shaft 40 continues to be rotated, there is a critical rotation risk interval in which the connection opening 21₃ has not completely stopped overlapping the minimum hole 59₂, but the gas flowing out of the outlet conduit 12₂ has such little pressure that it does not ignite the flame. This situation is referred to as unburned gas, which poses a safety risk. To avoid this risk, when rotation of the drive shaft 40 from the minimum MIN position for the gas outlet conduit 12₂ and from the maximum MAX position for the gas outlet conduit 12₁ starts, the radial stud 41 enters angular interval 92, the drive shaft being arranged in the axial blocking position, and the closure plug 84 blocking the connection opening 21₃. Therefore, and until the angle β forming angular interval 92 is exceeded, the closure plug 84 continues to block the connection opening 21₃. This position is shown in Figure 13d in which the gas cock 100 can be arranged in a closed OFF gas flow regulation position for the gas outlet conduit 12₂ and the maximum MAX gas flow regulation position for the gas outlet conduit 12₁, the connection opening 21₁ partially overlapping the minimum hole 59₁, and the connection opening 21₂ overlapping the outlet hole 53₁. In this embodiment of the gas cock 100, the critical rotation interval spans about 20°.

When continuing to rotate the drive shaft 40, the radial stud comes out of angular interval 92 and comes back into contact with the contact surface 97 until reaching an angular position in which the gas cock 100 can be arranged in a closed OFF gas flow regulation position for the gas outlet conduit 12₂ and a minimum MIN gas flow regulation position for the gas outlet conduit 12₁, the connection openings 21₂ and 21₃ not overlapping any hole, and the connection opening 21₁ overlapping the minimum hole 59₁. This gas flow regulation position of the gas cock 100 corresponds with the final rotation position of the drive shaft 40. In said final rotation position, the radial stud 41 the body 10 of the gas cock 100 comprises a stop 96 defining the final rotation position.

## Claims

1. Gas cock with a safety valve for a gas cooking appliance, comprising a body (10) comprising a gas inlet conduit (11) fluidically communicated with the safety valve (30), and at least one gas outlet conduit (12); a regulating element suitable for regulating the incoming gas flow from the safety valve (30) to the outlet conduit (12) depending on the angular position thereof, the regulating element being arranged in a housing (51) of the body (10) fluidically communicated with the safety valve (30) and with the outlet conduit (12); a drive shaft (40) coupled to the regulating element, said drive shaft (40) being rotatable between an initial rotation position and a final rotation position, and axially movable between an axial standby position and an axial pressing position, the drive shaft (40) acting on the transmission element (70) to open the safety valve (30) when it is arranged in the axial pressing position; blocking means for closing the gas passage of at least one gas outlet conduit (12) when the drive shaft (40) is arranged in an axial blocking position; and guiding means for moving the drive shaft (40) to the axial blocking position when said drive shaft (40) is arranged in at least a given angular interval, **characterised in that** the regulating element is a rotating disk (20) comprising at least one connection opening (21) for regulating gas flow to the outlet conduit (12) depending on the angular position thereof, the rotating disk (20) comprising a coupling hole (24) with the drive shaft (40) going through same, and said rotating disk (20) being axially retained supported on a contact area (52) of the housing (51) of the body (10), the contact area (52) comprising at least one outlet hole (53) fluidically communicated with the gas outlet conduit (12), and the blocking means comprising at least one closure plug (84) blocking a certain area of the rotating disk (20) when the drive shaft (40) is arranged in the axial blocking position, said closure plug (84) being attached to the drive shaft (40) through an arm (83).

2. Gas cock according to claim 1, wherein the area of the rotating disk (20) blocked by the closure plug (84) comprises at least one connection opening (21).

3. Gas cock according to claim 1 or 2, wherein the rotating disk (20) is arranged facing the transmission element (70), the drive shaft (40) comprising an end (48) acting on the transmission element (70), the axial blocking position of the drive shaft (40) being the axial standby position.

4. Gas cock according to claim 3, wherein the drive shaft (40) comprises a transverse stud (41), and the guiding means comprise a guiding surface (91, 92, 97) interacting with the transverse stud (41), said guiding surface (91, 92, 97) establishing angular intervals (91, 92) in which the drive shaft (40) is in the axial blocking position.

5. Gas cock according to claim 4, comprising a cap (90) fixed to the body (10), the guiding surface (91, 92, 97) being arranged on an inner face of said cap (90).

6. Gas cock according to claim 5, comprising a spring (94) with an end arranged supported on a washer (93) which is arranged coupled to the drive shaft (40) on the outside of the gas cock (100), and a second end supported on the outer portion of the cap (90), said spring (94) returning the drive shaft (40) to the standby position when it stops pushing said drive shaft (40) to open the safety valve (30).

7. Gas cock according to any of claims 3 to 6, wherein the end (48) of the drive shaft (40) comprises a support surface parallel to the contact area (52) on which the rotating disk (20) is supported, the rotating disk (20) being axially retained by means of a spring (81) pushing the rotating disk (20) at one of the ends thereof, the other end of the spring (81) being supported on the support surface.

8. Gas cock according to claim 7, wherein the support surface is a surface of the arm (83).

9. Gas cock according to any of the preceding claims, wherein the body (10) comprises a through hole (14) communicated through one of its ends with the housing (51), the drive shaft (40) going through the through hole (14) and the drive shaft (40) being tightly fitted with possibility of rotation in said through hole (14).

10. Gas cock according to claim 7, wherein the other end of the through hole (14) is communicated with a seat comprising an O-ring (46) which assures leak-tightness.

11. Gas cock according to any of the preceding claims, wherein the contact area (52) on which the rotating disk (20) is supported comprises at least one minimum hole (59), the minimum hole (59) being fluidically communicated with a corresponding gas outlet conduit (12), the minimum gas flow being regulated by overlapping the connection opening (21) of the rotating disk (20) with the corresponding minimum hole (59) in a given angular position of the rotating disk (20), and the closure plug (84) closing said connection opening (21) when the drive shaft (40) is arranged in the axial blocking position.

12. Gas cock according to any of the preceding claims, comprising a first outlet conduit (12₁) configured for supplying gas to a main crown, and a second outlet conduit (12₂) configured for supplying gas to a secondary crown, the rotating disk (20) comprising at least one connection opening (21) for overlapping with the outlet conduits (12₁, 12₂), and the contact area (52) on which the rotating disk (20) is supported comprising minimum holes (59₁, 59₂), the gas flow to the outlet conduits (12₁,12₂) being regulated by overlapping the outlet holes (53₁, 53₂) or the respective minimum holes (59₁, 59₂) with the connection opening (21), the closure plug (84) blocking at least one connection opening (21) when it comes out of overlapping the minimum hole (59₂) for the second outlet conduit (12₂), when the drive shaft (40) is arranged in an angular blocking interval.

13. Gas cock according to any of the preceding claims, wherein the closure plug (84) is made of an elastomer material.

14. Gas cooking appliance, **characterised in that** it comprises at least one gas cock according to any of the preceding claims.
